# EUROPEAN PATENT APPLICATION

(11) **EP 4 803 326 A1**
(43) Date of publication of application: **09.09.2026**
(21) Application number: 26156447.0
(22) Date of filing: 04.02.2026
(51) Int. Cl.: B60C 1/00, B60C 11/00, B60C 11/03, B60C 11/11

(54) **MOTORCYCLE TIRE**

(30) Priority: 03.03.2025 JP 2025033196
(71) Applicant: SUMITOMO RUBBER INDUSTRIES, LTD., Kobe-shi, Hyogo 651-0072 (JP)
(72) Inventor: ICHIRYU, Yutaka, Kobe-shi, 651-0072 (JP); MIHARA, Takuya, Kobe-shi, 651-0072 (JP)
(74) Representative: Plasseraud IP

(57) **Abstract**

A motorcycle tire (1) for running on rough terrain having a tread portion (2), wherein the tread portion (2) includes a plurality of blocks (10). The blocks (10) each include a ground contacting surface (11) and a plurality of outer peripheral surfaces (12) extending from the ground contacting surface (11) to a tread base surface (19). The ground contacting surface (11) of at least one block (10) has a groove (15) with both ends open to the outer peripheral surfaces (12). The groove (15) includes a first portion (16) connected to the outer peripheral surfaces (12), and a second portion (17) communicating with the first portion (16), extending in a direction different from the first portion (16), and terminating within the ground contacting surface (11) without reaching the outer peripheral surfaces (12).

## Description

### RELATED APPLICATIONS

This application claims the benefit of foreign priority to Japanese Patent Application No. JP2025-033196, filed March 3, 2025, which is incorporated by reference in its entirety.

### FIELD OF THE INVENTION

The present disclosure relates to a motorcycle tire for running on rough terrain.

### BACKGROUND OF THE INVENITON

Conventionally, various motorcycle tires for running on rough terrain have been proposed (for example, refer to Japanese Unexamined Patent Application Publication No. 2019-199138 (Patent Literature 1)).

### SUMMARY OF THE INVENTION

However, with the motorcycle tire described in Patent Literature 1, it is difficult to obtain a sufficient ground contact feeling, and there is a possibility that controllability may be insufficient, particularly when mounted on the front wheel.

The present disclosure was made in view of the above, and a primary object thereof is to provide a motorcycle tire for running on rough terrain.

The present disclosure is a motorcycle tire for running on rough terrain including a tread portion, wherein
the tread portion includes a plurality of blocks,
each of the blocks includes a ground contacting surface and a plurality of outer peripheral surfaces extending from the ground contacting surface to a tread base surface,
the ground contacting surface of at least one block of the blocks is provided with a groove having both ends open to the outer peripheral surfaces, and
the groove includes a first portion connected to the outer peripheral surfaces, and a second portion communicating with the first portion, extending in a direction different from the first portion, and terminating within the ground contacting surface without reaching the outer peripheral surfaces.

Since the motorcycle tire for running on rough terrain of the present disclosure has the above configuration, it is easy to obtain a sufficient ground contact feeling, and controllability can be easily improved.

### BRIEF DESCRIPTION OF THE DRAWINGS

FIG. 1 is a cross-sectional view of a tread portion showing an embodiment of the motorcycle tire of the present disclosure.
FIG. 2 is a development view of the tread portion shown in FIG. 1.
FIG. 3 is a perspective view of one of blocks shown in FIG. 2.
FIG. 4 is a cross-sectional view taken along line B-B of FIG. 3.
FIG. 5 is a cross-sectional view taken along line C-C of FIG. 3.
FIG. 6 is an enlarged development view of axially one side of the tread portion.

### DETAILED DESCRIPTION OF THE INVENTION

An embodiment of the present disclosure will now be described in conjunction with accompanying drawings. It should be understood that the drawings may contain exaggerated representations and representations that differ from the dimensional ratios of the actual structure in order to aid in understanding the present disclosure. Further, in case of multiple embodiments, identical or common elements are assigned with the same reference signs throughout the embodiments, and redundant explanations are omitted. Furthermore, the specific configurations represented in the embodiments and the drawings are intended to aid in understanding the contents of the present disclosure, and the present disclosure is not limited to the specific configurations illustrated.

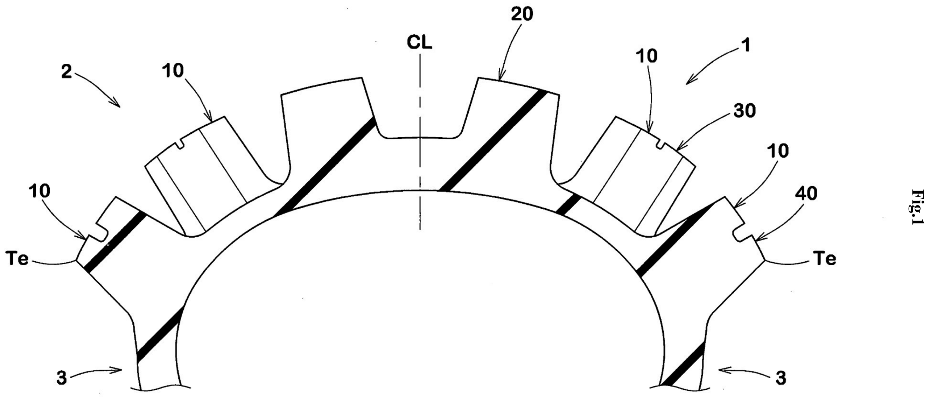

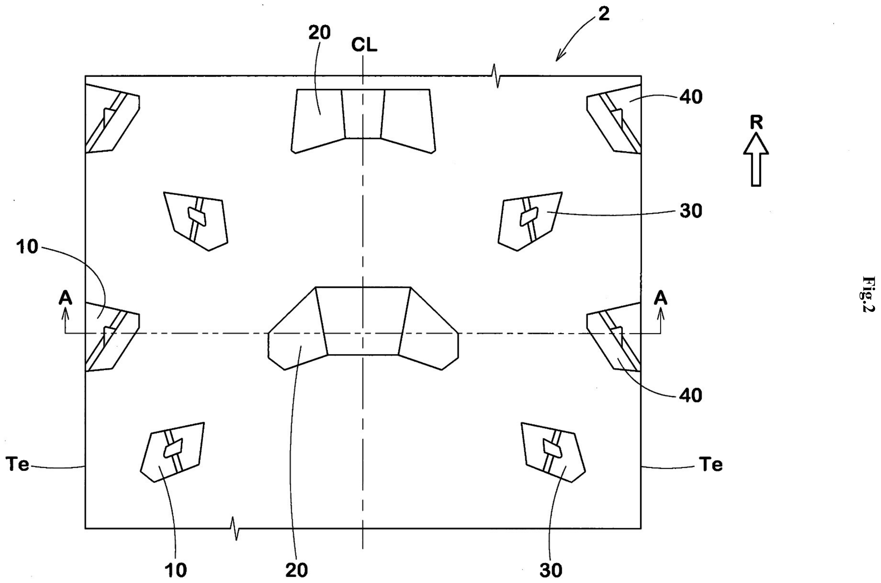

FIG. 1 shows a cross-sectional view of a tread portion 2 of a motorcycle tire 1 for running on rough terrain of the present embodiment (hereinafter, may sometimes be simply referred to as "tire 1") in a standard state. FIG. 2 is a development view of the tread portion 2 of the tire 1 developed into a plane. FIG. 1 corresponds to a cross-sectional view taken along line A-A in FIG. 2.

In the case of a tire for which various standards have been established, the "standard state" refers to a state in which the tire is mounted on a standard rim, inflated to a standard inner pressure, and loaded with no tire load. In the case of a tire for which various standards have not been established, the standard state means a standard use state according to the purpose of use of the tire and being loaded with no tire load. In the present specification, unless otherwise specified, dimensions of various parts are values measured in the standard state.

A "standard rim" refers to a wheel rim specified for the concerned tire by a standard included in a standardization system on which the tire is based, for example, the "normal wheel rim" in JATMA, "Design Rim" in TRA, and "Measuring Rim" in ETRTO.

The term "standard inner pressure" refers to air pressure specified for the concerned tire by a standard included in a standardization system on which the tire is based, for example, the maximum air pressure in JATMA, the maximum value listed in the "TIRE LOAD LIMITS AT VARIOUS COLD INFLATION PRESSURES" table in TRA, and "INFLATION PRESSURE" in ETRTO.

As shown in FIG. 1, the tire 1 of the present embodiment is suitably used as a tire for motocross competition for running on rough terrain (off-road), for example. The tire 1 of the present embodiment is suitably used as a rear wheel tire for a motocross vehicle, for example. However, the present disclosure is not limited to such an aspect. The tread portion 2 of the tire 1 of the present embodiment has an outer surface curved in an arc shape convex outward in a tire radial direction in a cross section.

The tire 1 of the present embodiment is provided with a carcass and a tread reinforcing layer (not shown), for example. Well-known configurations are appropriately adopted for these.

As shown in FIG. 1 and FIG. 2, the tread portion 2 includes a plurality of blocks 10 and a plurality of crown blocks 20.

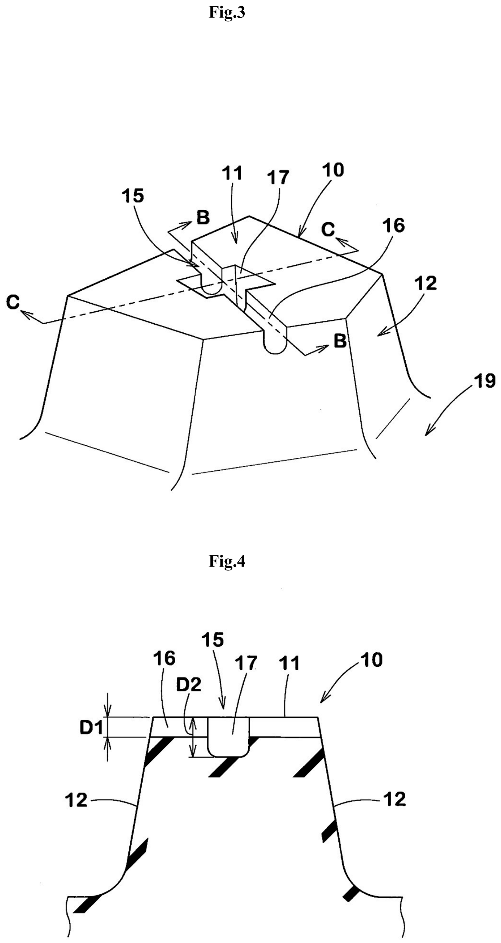

FIG. 3 shows an example of one of the blocks 10. Each of the blocks 10 includes a ground contacting surface 11 and a plurality of outer peripheral surfaces 12 extending from the ground contacting surface 11 to a groove bottom (i.e., tread bottom surface or tread base surface) 19.

The ground contacting surface 11 of at least one of the blocks 10 is provided with a groove 15 having both ends open to the outer peripheral surfaces 12. The groove 15 includes a first portion 16 connected to the outer peripheral surfaces 12, and a second portion 17 communicating with the first portion 16. The second portion 17 extends in a direction different from the first portion 16 and terminates within the ground contacting surface 11 without reaching the outer peripheral surfaces 12.

In the motorcycle tire of the present disclosure, the edge effect is increased by the first portion 16 connected to the outer peripheral surfaces 12, and a good ground contact feeling is obtained. Further, an amount of flexure of the surface of the block 10 that contacts the ground is increased by the second portion 17, therefore, the ground contact feeling is improved. In particular, since the second portion 17 communicating with the first portion 16, a synergistic effect of the first portion 16 and the second portion 17 is obtained, thereby, the flexure of the surface of the block 10 is added to the edge effect, therefore, the ground contact feeling and the controllability are improved. Furthermore, since the second portion 17 terminates within the ground contacting surface 11, insufficient rigidity of the block 10 is suppressed, and thus the controllability can be easily improved.

It is preferred that the second portion 17 is formed in the central region in a longitudinal direction of the first portion 16. With such an arrangement of the second portion 17, the block 10 deforms appropriately in response to input from any direction, and the rigidity of the block 10 can be appropriately set. However, in the present disclosure, the improvement in the controllability described above can be expected regardless of the arrangement of the second portion 17.

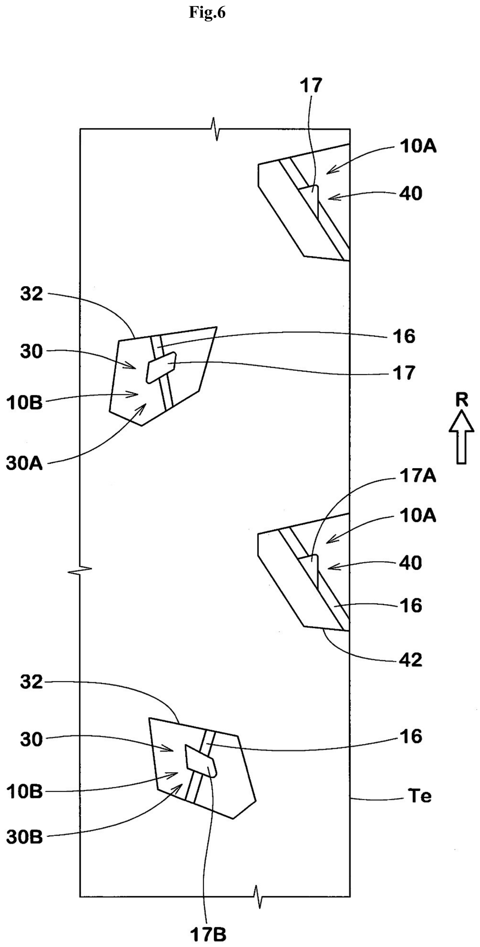

In the ground contacting surface 11, the second portion 17 can be triangular or quadrilateral (see FIG. 6 described later), for example. The second portion 17 may be formed in a polygonal shape with five or more angles. However, in the present disclosure, the improvement in the controllability described above can be expected regardless of the shape of the second portion 17.

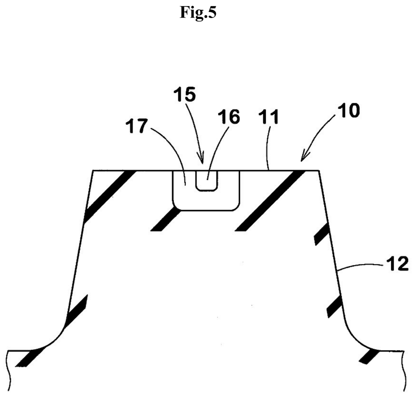

FIG. 4 and FIG. 5 show cross-sectional views of the block 10 shown in FIG. 3. FIG. 4 is a cross-sectional view taken along line B-B shown in FIG. 3, and FIG. 5 is a cross-sectional view taken along line C-C shown in FIG. 3.

It is preferred that a depth D2 of the second portion 17 is greater than a depth D1 of the first portion 16. In other words, it is preferred that the depth D1 of the first portion 16 is smaller than the depth D2 of the second portion 17. As a result, while maintaining appropriate rigidity of the block 10, a good ground contact feeling is obtained due to the edge effect of the first portion 16 and the second portion 17, and the controllability can be easily improved.

It is preferred that a ratio D2/D1 of the depth D2 of the second portion to the depth D1 of the first portion is in the range from 1.3 to 4.0.

Since the ratio D2/D1 is 1.3 or more, the amount of flexure of the block 10 that contacts the ground increases, therefore, the ground contact feeling is improved.

In order to further improve the above effect, the ratio D2/D1 is more preferably 1.5 or more, and even more preferably 1.8 or more.

Since the ratio D2/D1 is 4.0 or less, the appropriate rigidity of the block 10 is maintained, and thus the ground contact feeling is improved.

In order to further improve the above effect, the ratio D2/D1 is more preferably 3.5 or less, and even more preferably 3.0 or less, in combination with any of the above lower limit values.

As an example, the ratio D2/D1 is preferably in the range from 1.5 to 3.5, and more preferably in the range from 1.8 to 3.0.

It is preferred that a ratio A2/A1 of an area A2 of the second portion to an area A1 of the first portion on the ground contacting surface 11 is in the range from 0.2 to 1.5.

Since the ratio A2/A1 is 0.2 or more, the amount of flexure of the block 10 that contacts the ground increases, and thus the ground contact feeling is improved.

In order to further improve the above effect, the ratio A2/A1 is more preferably 0.3 or more, and further more preferably 0.4 or more.

Since the ratio A2/A1 is 1.5 or less, the appropriate rigidity of the block 10 is maintained, thereby, the ground contact feeling is improved.

In order to further improve the above effect, the ratio A2/A1 is more preferably 1.3 or less, and even more preferably 1.2 or less, in combination with any of the above lower limit values.

As an example, the ratio A2/A1 is preferably in the range from 0.3 to 1.3, and more preferably in the range from 0.4 to 1.2.

As shown in FIG. 1 and FIG. 2, in the tire 1 of the present embodiment, each of the crown blocks 20 is arranged at a position crossing a tire equator CL. The blocks 10 are arranged outside the crown blocks 20 in a tire axial direction.

Each of the blocks 10 is arranged at a position so as not to cross the tire equator CL. Since when a rider drives a motorcycle, the rider banks the vehicle body in a cornering radius direction during cornering, the ground contact surface of the tread portion 2 sequentially moves from around the tire equator CL toward the shoulder side, and the ground contact pressure increases more on the shoulder side at that time. The blocks 10 arranged at positions that do not cross the tire equator CL contact the ground during cornering.

In a motorcycle, the controllability is more important during cornering than during straightaway driving. Especially in a front tire, since the steering angle changes due to the influence of changes in the road surface, the impact on the controllability is significant. Therefore, it can be said that arranging the grooves 15 including the first portions 16 and the second portions 17 in the blocks 10 that contact the ground during cornering is effective for improving the controllability.

On the other hand, the crown blocks 20 on the tire equator CL greatly affect braking force, especially in a front tire. Generally, in braking, higher rigidity near the block ground contacting surface is better, therefore, in the present disclosure, the grooves 15 including the first portions 16 and the second portions 17 are provided in the blocks 10 other than the crown blocks 20 crossing the tire equator CL, and the grooves 15 are not provided in the crown blocks 20 arranged at the positions crossing the tire equator CL. Thereby, both the braking force and the controllability can be achieved.

The blocks 10 includes a plurality of middle blocks 30 and a plurality of shoulder blocks 40. The middle blocks 30 are arranged axially outside the crown blocks 20. The shoulder blocks 40 are arranged on sides closest to the ground contact edges (Te) in the tire axial direction.

The "ground contact edges" are outer edges in the tire axial direction of an area of the tread portion that contacts the ground when the tire in the standard state is loaded with a standard tire load and the camber angle is maximum.

The term "standard tire load" refers to a tire load specified for the concerned tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

The middle blocks 30 are arranged between the crown blocks 20 and the shoulder blocks 40 in the tire axial direction.

Although it is preferred that the grooves 15 are formed in all of the middle blocks 30 and the shoulder blocks 40, it is sufficient if the groove 15 is formed in at least one middle block 30 or shoulder block 40. By forming the groove 15 in at least one middle block 30 or shoulder block 40, a good ground contact feeling during cornering is obtained, and the controllability can be easily improved.

FIG. 6 is an enlarged development view of the middle blocks 30 and the shoulder blocks 40 of FIG. 2. In each of the middle blocks 30 in the present embodiment, it is preferred that the first portion 16 is connected to an outer peripheral surface 32 that has the largest angle with respect to the tire equator CL. The first portion 16 in each of the middle blocks 30 configured as such extends along the tire equator CL, includes a lot of edge components in the tire circumferential direction parallel to the tire equator CL, and thus acts as resistance during sliding (skidding). Therefore, slide controllability during cornering is easily improved.

Similarly, in each of the shoulder blocks 40 in the present embodiment, it is preferred that the first portion 16 is connected to an outer peripheral surface 42 that has the largest angle with respect to the tire equator CL. The first portion 16 in each of the shoulder blocks 40 configured as such extends along the tire equator CL, includes a lot of edge components in the tire circumferential direction parallel to the tire equator CL, and thus acts as resistance during sliding (skidding). Therefore, the slide controllability during cornering is easily improved.

As shown in FIG. 2, the tread portion 2 in the present embodiment has a directional pattern bound with an intended tire rotational direction (R). The tire rotational direction (R) is displayed on sidewall portions 3 (shown in FIG. 1) with characters or symbols, for example. However, the present disclosure is not limited to such an aspect.

In each axial half of the tire 1, the blocks 10 includes first blocks 10A arranged on the side closest to the ground contact edge (Te) in the tire axial direction and second blocks 10B arranged on the side closest to the tire equator CL. In the present embodiment, the shoulder blocks 40 correspond to the first blocks 10A, and the middle blocks 30 correspond to the second blocks 10B.

The cornering method of a motorcycle changes depending on the road surface condition. For example, on a soft road surface where the crown blocks 20 dig in, repeated driving causes the road surface to be dug up and deteriorate, making deeply banked driving difficult.

On the other hand, on a hard road surface, the cornering speed is stabilized, so the vehicle is often driven with the body leaned more than the rider (lean out), using the middle blocks 30 up to the shoulder blocks 40. At this time, due to the structure of the motorcycle, the handlebar is slightly turned inward relative to the cornering direction, therefore, it is preferred that the angles of the first portions 16 with respect to the tire rotational direction (R) of the tire 1 are small. Further, if the first portion 16 are each inclined such that the heel side (i.e., leading side) in the tire rotational direction (R) thereof is closer to the tire equator CL, the edge component in the tire circumferential direction can be exerted.

In other words, it is preferred that the first portion 16 of each of the first blocks 10A in the present embodiment is inclined so that the heel side in the tire rotational direction (R) faces (heads) toward the tire equator CL, i.e., the first portion 16 of each of the first blocks 10A is inclined toward the tire equator CL as it goes toward the heel side in the tire rotational direction (R).

On the other hand, on a hard and clean, flat road surface, there is also a cornering method (drift driving) where the vehicle body is raised slightly and the rear tire is slid relative to the cornering direction. In that case, the middle blocks 30 contact the ground most often, and the front tire is made to follow the cornering of the rear tire by steering in a direction opposite to the cornering direction (counter-steer). Therefore, it can be said that it is more effective for improving the controllability if the heel side faces toward the ground contact edge (Te) side relative to the tire rotational direction (R) of the tire 1.

That is, the middle block 30, which is the second blocks 10B, preferably includes middle blocks 30A each in which the heel side in the tire rotational direction (R) of the first portion 16 is inclined so as to face the tire equator CL, in order to accommodate driving in a leaned-out posture and drift driving with the vehicle body raised, and middle blocks 30B each in which a toe side (i.e., trailing side) in the tire rotational direction (R) of the first portion 16 is inclined so as to face the tire equator CL. And it is preferred that the middle blocks 30A and the middle blocks 30B are alternately arranged in the tire circumferential direction.

In the present embodiment, each of the shoulder blocks 40 has a second portion 17A with a triangular shape. The second portions 17A configured as such easily increases the rigidity of the shoulder blocks 40, thereby, the controllability during high-speed cornering where the shoulder blocks 40 contacts the ground is increased.

On the other hand, each of the middle blocks 30 in the present embodiment has a second portion 17B with a quadrilateral shape. The second portions 17B configured as such optimize the rigidity of the middle blocks 30, therefore, appropriate deflection of the middle blocks 30 is obtained on hard road surfaces, thereby, the controllability is improved, for example.

It is preferred that the first portions 16 of the shoulder blocks 40 are inclined more with respect to the tire circumferential direction than the first portions 16 of the middle blocks 30. This configuration improves the controllability during high-speed cornering.

It is preferred that a rubber composition forming the blocks 10 has a complex elastic modulus E* in the range from 8 to 13 MPa when loaded with 1% dynamic strain at 70 degrees Celsius. The complex elastic modulus E* is measured by using a measurement device (EPLEXOR series) manufactured by GABO QUALIMETER Testanlagen GmbH, under the conditions of a temperature of 70 degrees Celsius, a frequency of 10 Hz, an initial strain of 5%, a dynamic strain of 1%, and an extension mode.

Since the complex elastic modulus E* of the rubber composition forming the blocks 10 is 8 MPa or more, the rigidity of the blocks 10 is increased, therefore, good controllability is obtained. Since the complex elastic modulus E* of the rubber composition forming the blocks 10 is 13 MPa or less, a sufficient amount of flexure of the blocks 10 that contact the ground is obtained, thereby, the ground contact feeling is improved.

It is preferred that the rubber composition forming the blocks 10 has a loss tangent tanδ in the range from 0.15 to 0.30 when loaded with 1% strain at 70 degrees Celsius. The loss tangent tanδ is measured by using a measurement device (EPLEXOR series) manufactured by GABO QUALIMETER Testanlagen GmbH under the conditions of a temperature of 70 degrees Celsius, a frequency of 10 Hz, an initial strain of 5%, a dynamic strain of 1%, and an extension mode.

Since the loss tangent tanδ of the rubber composition forming the blocks 10 is 0.15 or more, good controllability is obtained. Since the loss tangent tanδ of the rubber composition forming the blocks 10 is 0.30 or less, a good ground contact feeling is obtained.

It is preferred that the rubber composition forming the blocks 10 has a hardness Hs in the range from 60 to 85 degrees at a room temperature of 25 degrees Celsius. The hardness is measured by pressing a type-A durometer onto a sample from the ground contact surface side at 25 degrees Celsius in accordance with Japanese Industrial Standards JIS K 6253.

Since the hardness Hs of the rubber composition forming the blocks 10 is 60 degrees or more, the rigidity of the blocks 10 is increased, and thus good controllability is obtained. In order to further increase the above effect, it is further preferred that the hardness Hs of the rubber composition forming the blocks 10 is 65 degrees or more.

Since the hardness Hs of the rubber composition forming the blocks 10 is 85 degrees or less, a sufficient amount of flexure of the blocks 10 that contact the ground is obtained, and thus the ground contact feeling is improved. In order to further enhance the above effect, it is more preferred that the hardness Hs of the rubber composition forming the blocks 10 is 80 degrees or less in combination with any of the above lower limit values.

As an example, it is preferred that the hardness Hs of the rubber composition forming the blocks 10 is in the range from 60 to 80 degrees.

While detailed description has been made of the tire 1 of the present disclosure, the present disclosure can be embodied in various forms without being limited to the illustrated embodiment.

### [Statement of Disclosure]

The present disclosure includes the following aspects.

### [Present Disclosure 1]

A motorcycle tire for running on rough terrain including a tread portion, wherein
the tread portion includes a plurality of blocks,
each of the blocks includes a ground contacting surface and a plurality of outer peripheral surfaces extending from the ground contacting surface to a tread base surface,
the ground contacting surface of at least one block of the blocks is provided with a groove having both ends open to the outer peripheral surfaces, and
the groove includes a first portion connected to the outer peripheral surfaces, and a second portion communicating with the first portion, extending in a direction different from the first portion, and terminating within the ground contacting surface without reaching the outer peripheral surfaces.

### [Present Disclosure 2]

The motorcycle tire according to Present Disclosure 1, wherein the second portion has a depth (D2) greater than a depth (D1) of the first portion.

### [Present Disclosure 3]

The motorcycle tire according to Present Disclosure 1 or 2, wherein a ratio D2/D1 of the depth (D2) of the second portion to the depth (D1) of the first portion is in a range from 1.3 to 4.0.

### [Present Disclosure 4]

The motorcycle tire according to any one of Present Disclosures 1 to 3, wherein the at least one block is arranged at a position so as not to cross a tire equator.

### [Present Disclosure 5]

The motorcycle tire according to Present Disclosure 4, wherein the first portion is connected to the outer peripheral surface having a largest angle with respect to the tire equator among the outer peripheral surfaces of the at least one block.

### [Present Disclosure 6]

The motorcycle tire according to Present Disclosure 4 or 5, wherein
the tread portion is bound with an intended tire rotational direction,
the at least one block is a plurality of the blocks and includes first blocks closest to a ground contact edge side in the tire axial direction and second blocks closest to the tire equator side, and
the first portion of each of the first blocks is inclined so that a heel side thereof in the tire rotational direction heads toward the tire equator.

### [Present Disclosure 7]

The motorcycle tire according to Present Disclosure 6, wherein the second blocks include a block in which the first portion is inclined so that the heel side thereof in the tire rotational direction heads toward the tire equator, and a block in which the first portion is inclined so that a toe side thereof in the tire rotational direction heads toward the tire equator.

### [Present Disclosure 8]

The motorcycle tire according to any one of Present Disclosures 1 to 7, wherein
a rubber composition forming the blocks has a complex elastic modulus E* in a range from 8 to 13 MPa, and
the complex elastic modulus E* is measured in accordance with Japanese Industrial Standards JIS K6394 under the conditions of a temperature of 70 degrees Celsius, a frequency of 10 Hz, an initial strain of 5%, a dynamic strain of 1%, and an extension mode.

### [Present Disclosure 9]

The motorcycle tire according to any one of Present Disclosures 1 to 8, wherein
a rubber composition forming the blocks has a loss tangent tanδ in a range from 0.15 to 0.30, and
the loss tangent tanδ is measured in accordance with Japanese Industrial Standards JIS K6394 under the conditions of a temperature of 70 degrees Celsius, a frequency of 10 Hz, an initial strain of 5%, a dynamic strain of 1%, and an extension mode.

### [Present Disclosure 10]

The motorcycle tire according to any one of Present Disclosures 1 to 9, wherein
a rubber composition forming the blocks has a hardness (Hs) in a range from 60 to 85 degrees, and
the hardness (Hs) is measured in accordance with Japanese Industrial Standards JIS K 6253 at a room temperature of 25 degrees Celsius.

### [Present Disclosure 11]

The motorcycle tire according to any one of Present Disclosures 1 to 10, wherein the second portion is formed in a central region in a longitudinal direction of the first portion.

### [Present Disclosure 12]

The motorcycle tire according to any one of Present Disclosures 1 to 11, wherein the second portion is formed in a triangular shape, a quadrilateral shape, or a polygonal shape with five or more angles in the ground contacting surface of the at least one block.

### [Present Disclosure 13]

The motorcycle tire according to any one of Present Disclosures 1 to 12, wherein the groove is formed in all of the blocks.

### [Present Disclosure 14]

The motorcycle tire according to Present Disclosure 4, wherein
the tread portion further includes a plurality of crown blocks each arranged so as to cross a tire equator, and
the crown blocks are not provided with the groove.

### [Present Disclosure 15]

The motorcycle tire according to Present Disclosure 3, wherein the ratio D2/D1 is in a range from 1.5 to 3.5.

### [Present Disclosure 16]

The motorcycle tire according to Present Disclosure 3, wherein the ratio D2/D1 is in a range from 1.8 to 3.0.

### [Present Disclosure 17]

The motorcycle tire according to any one of Present Disclosures 1 to 16, wherein a ratio A2/A1 of an area A2 of the second portion to an area A1 of the first portion on the ground contacting surface of the at least one block is in a range from 0.2 to 1.5.

### [Present Disclosure 18]

The motorcycle tire according to Present Disclosure 17, wherein the ratio A2/A1 is in a range from 0.3 to 1.3.

### [Present Disclosure 19]

The motorcycle tire according to Present Disclosure 6, wherein,
the second portion of each of the first blocks has a triangular shape in the ground contacting surface thereof, and
the second portion of each of the second blocks has a quadrilateral shape in the ground contacting surface thereof.

### [Present Disclosure 20]

The motorcycle tire according to Present Disclosure 10, wherein the hardness (Hs) is in a range from 60 to 80 degrees.

### [Description of Reference Signs]

- 1: motorcycle tire
- 2: tread portion
- 10: block
- 10A: first block
- 10B: second block
- 11: ground contacting surface
- 12: outer peripheral surface
- 15: groove
- 16: first portion
- 17: second portion
- 19: groove bottom
- 32: outer peripheral surface
- 42: outer peripheral surface
- CL: tire equator
- D1: depth
- D2: depth
- R: tire rotational direction

## Claims

1. A motorcycle tire for running on rough terrain comprising a tread portion, wherein
the tread portion includes a plurality of blocks,
each of the blocks includes a ground contacting surface and a plurality of outer peripheral surfaces extending from the ground contacting surface to a tread base surface,
the ground contacting surface of at least one block of the blocks is provided with a groove having both ends open to the outer peripheral surfaces, and
the groove includes a first portion connected to the outer peripheral surfaces, and a second portion communicating with the first portion, extending in a direction different from the first portion, and terminating within the ground contacting surface without reaching the outer peripheral surfaces.

2. The motorcycle tire according to claim 1, wherein the second portion has a depth (D2) greater than a depth (D1) of the first portion.

3. The motorcycle tire according to claim 1 or 2, wherein a ratio D2/D1 of the depth (D2) of the second portion to the depth (D1) of the first portion is in a range from 1.3 to 4.0.

4. The motorcycle tire according to any one of claims 1 to 3, wherein the at least one block is arranged at a position so as not to cross a tire equator.

5. The motorcycle tire according to claim 4, wherein the first portion is connected to the outer peripheral surface having a largest angle with respect to the tire equator among the outer peripheral surfaces of the at least one block.

6. The motorcycle tire according to claim 4 or 5, wherein
the tread portion is bound with an intended tire rotational direction,
the at least one block is a plurality of the blocks and includes first blocks closest to a ground contact edge side in the tire axial direction and second blocks closest to the tire equator side, and
the first portion of each of the first blocks is inclined so that a heel side thereof in the tire rotational direction heads toward the tire equator.

7. The motorcycle tire according to Claim 6, wherein the second blocks include a block in which the first portion is inclined so that the heel side thereof in the tire rotational direction heads toward the tire equator, and a block in which the first portion is inclined so that a toe side thereof in the tire rotational direction heads toward the tire equator.

8. The motorcycle tire according to any one of claims 1 to 7, wherein
a rubber composition forming the blocks has a complex elastic modulus E* in a range from 8 to 13 MPa, and
the complex elastic modulus E* is measured in accordance with Japanese Industrial Standards JIS K6394 under the conditions of a temperature of 70 degrees Celsius, a frequency of 10 Hz, an initial strain of 5%, a dynamic strain of 1%, and an extension mode.

9. The motorcycle tire according to any one of claims 1 to 8, wherein
a rubber composition forming the blocks has a loss tangent tanδ in a range from 0.15 to 0.30, and
the loss tangent tanδ is measured in accordance with Japanese Industrial Standards JIS K6394 under the conditions of a temperature of 70 degrees Celsius, a frequency of 10 Hz, an initial strain of 5%, a dynamic strain of 1%, and an extension mode.

10. The motorcycle tire according to any one of claims 1 to 9, wherein
a rubber composition forming the blocks has a hardness (Hs) in a range from 60 to 85 degrees, and
the hardness (Hs) is measured in accordance with Japanese Industrial Standards JIS K 6253 at a room temperature of 25 degrees Celsius.

11. The motorcycle tire according to any one of claims 1 to 10, wherein the second portion is formed in a central region in a longitudinal direction of the first portion.

12. The motorcycle tire according to any one of claims 1 to 11, wherein the second portion is formed in a triangular shape, a quadrilateral shape, or a polygonal shape with five or more angles in the ground contacting surface of the at least one block.

13. The motorcycle tire according to any one of claims 1 to 12, wherein the groove is formed in all of the blocks.

14. The motorcycle tire according to claim 4, wherein
the tread portion further includes a plurality of crown blocks each arranged so as to cross a tire equator, and
the crown blocks are not provided with the groove.

15. The motorcycle tire according to any one of claims 1 to 14, wherein a ratio A2/A1 of an area A2 of the second portion to an area A1 of the first portion on the ground contacting surface of the at least one block is in a range from 0.2 to 1.5.
